# EUROPÄISCHE PATENTSCHRIFT

(11) **EP 0 444 278 B1**
(45) Veröffentlichungstag und Bekanntmachung des Hinweises auf die Patenterteilung: **09.03.1994**
(21) Anmeldenummer: 90124331.1
(22) Anmeldetag: 15.12.1990
(51) Int. Cl.: B60G 17/04, B60G 17/08

(54) **Vorrichtung zur aktiven Regelung von Aufbaubewegungen bei Kraftfahrzeugen**
Device for the active control of body movements of motor cars
Dispositif pour le réglage actif de mouvements de la caisse de véhicules automobiles

(30) Priorität: 27.02.1990 DE 4006109
(43) Veröffentlichungstag der Anmeldung: 04.09.1991
(73) Patentinhaber: ROBERT BOSCH GMBH, 70442 Stuttgart (DE)
(72) Erfinder: Wanner, Michael, W-7031 Holzgerlingen (DE); Karnopp, Dean, Prof.Ing., Davis, CA 95616 (US)

(56) Entgegenhaltungen:
- EP-A- 0 197 317
- EP-A- 0 304 618
- DE-A- 3 403 649
- DE-A- 3 610 937
- DE-A- 3 738 284
- DE-A- 3 841 771
- DE-C- 3 902 743
- FR-A- 2 436 682
- FR-A- 2 562 844

## Beschreibung

### Stand der Technik

Die Erfindung geht aus von einer Vorrichtung zur aktiven Regelung von Aufbaubewegungen bei Kraftfahrzeugen zur Reduktion von unerwünschten Fahrzeugbewegungen nach dem Oberbegriff des Anspruchs 1.

Durch die DE-A-38 41 771 ist ein Radabstützaggregat gemäß den Oberbegriff des Anspruchs 1 bekannt geworden mit einer konventionellen Niveauregulierung und mit einem Kolben-Zylinder-Aggregat, über das durch Zufuhr hydraulischer Energie die Aufbau- und Radbewegung vertikal aktiv gesteuert werden kann. Hier muß für jede Auf- und Abbewegung Energie aufgewendet werden. Dieser Energiebedarf ist sehr hoch. Durch Drosseln zwischen Arbeitskammern des Kolben-Zylinder-Aggregates erhält man zusätzlich in gewissem Umfang die Wirkung einer konventionellen Dämpfung, was jedoch bei dem bekannten Radabstützaggregat zu zusätzlichem Energieverbrauch führt.

Zur Realisierung konventioneller Niveauregulierungssysteme ist es bekannt, bei Fahrzeugen mit Stahlfederelementen die Niveauregulierung im Regelfall im Stoßdämpfer zu integrieren, der sich beispielsweise auch automatisch und veranlaßt durch die vertikalen Fahrzeugbewegungen bis zur gewünschten Regelhöhe im Fahrzeugaufbau hochpumpt. Bei Fahrzeugen mit Luftfederelementen läßt sich eine Niveauregulierung mit Hilfe der Luftfeder realisieren, indem dieser bei Belastung über entsprechende äußere Sensoren eine entsprechend größere Druckmittelmenge zugeführt wird; schließlich ist es auch bekannt, bei Fahrzeugen mit einer sogenannten hydropneumatischen Federung eine Niveauregulierung mit Hilfe eines hydraulischen Stellglieds zu realisieren. Problematisch ist aber bei allen diesen bekannten Systemen, daß ausschließlich die Regelung der Aufbauposition, also die Höhe des Fahrzeugaufbaus über dem Erdboden, bei Änderung der Zuladung erfolgt und solche Systeme auf diese Maßnahme ausschließlich ausgelegt sind, wobei ein entsprechender Regelvorgang extrem langsam abläuft, mindestens mehrere Sekunden bis zu Minuten andauert, so daß eine Ausregelung von dynamischen Lastschwankungen, beispielsweise also eine Einwirkung auf den gegenwärtigen Fahrzustand oder auf schnell ablaufende Aufbaubewegungen unmöglich ist, wenn man von einem für solche konventionelle Niveauregulierungssysteme erforderlichen, eher geringen Energie- und Leistungsbedarf ausgeht.

Andererseits ermöglichen voll aktive hydraulische Fahrwerksysteme zwar eine optimale Fahrwerkregelung hinsichtlich Fahrkomfort und Handling des Fahrzeugs, sie erweisen sich jedoch unter Kostengesichtspunkten als unrealistisch und haben selbst dann, wenn zur Leistungseinsparung Zusatzbauteile vorgesehen sind, sehr hohe Leistungsanforderungen. Derartige bekannte aktive Systeme können auch unter Gesichtspunkten der Systemstabilität- und -zuverlässigkeit als kritisch angesehen werden.

Bekannte Vorrichtungen, mit denen sich die Federhärte bei federnden Rad-Aufhängungssystemen in Fahrzeugen automatisch oder durch Steuerung verändern läßt (DE-A-2 604 809; DE-B-1 275 882) verstellen die Federhärte in Abhängigkeit zur Fahrgeschwindigkeit und sonstigen Parametern dadurch, daß bei einer reinen Luftfederung für Fahrzeuge (DE-B-1 275 882) ein in seinem Volumen veränderbarer Balg als erster Druckraum über einen Durchlaß an weitere, jeweils ein konstantes Volumen aufweisende Druckräume angeschlossen ist. In den Verbindungsleitungen zwischen den Druckräumen kann ein sich durch die Einfederungen selbst steuerndes und bei starker Einfederung eine immer stärkere Drosselung (im Sinne einer Verhärtung der Federung) bewirkendes Ventil vorgesehen sein oder es sind selbsttätig in einer Richtung schließende Ventile vorgesehen, die jedoch nicht auf äußere Last- und Bewegungsparameter durch eine selektive Ansteuerung ansprechen. Es muß daher davon ausgegangen werden, daß die bekannte Luftfederung mit zuschaltbaren weiteren Druckräumen vergleichsweise unspezifisch auf äußere Bedingungen reagiert und bei langsamer Federungsbewegung eine im ganzen weicher reagierende Federhärte vorgibt, die sich bei schneller oder tiefer Einfederung dann zunehmend verhärtet, wodurch offensichtlich die gewünschte progressive Federungscharakteristik auch erzielt wird.

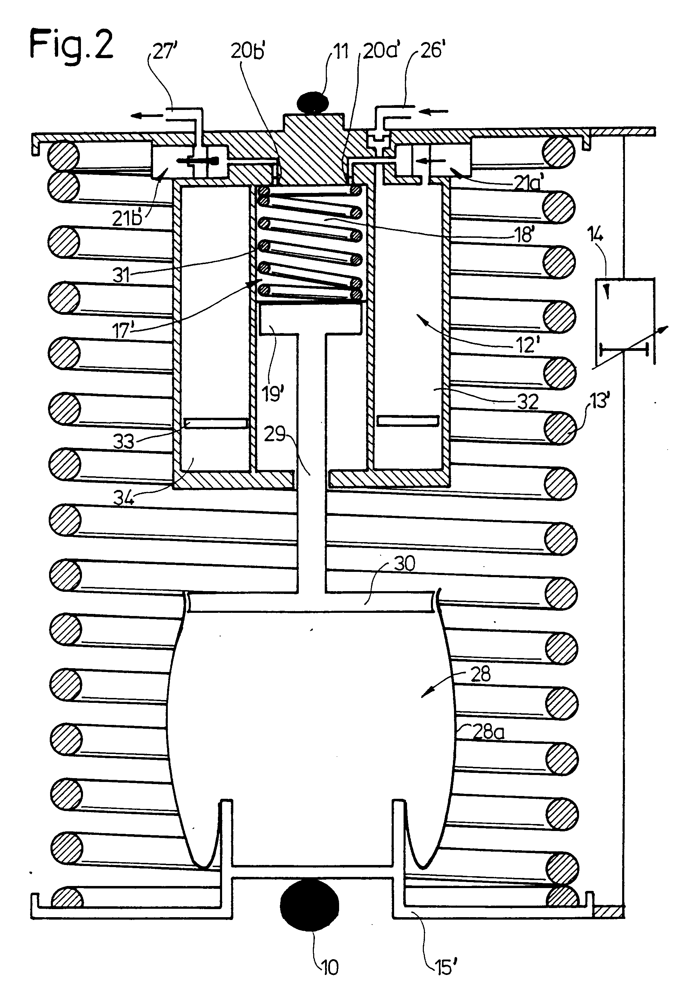

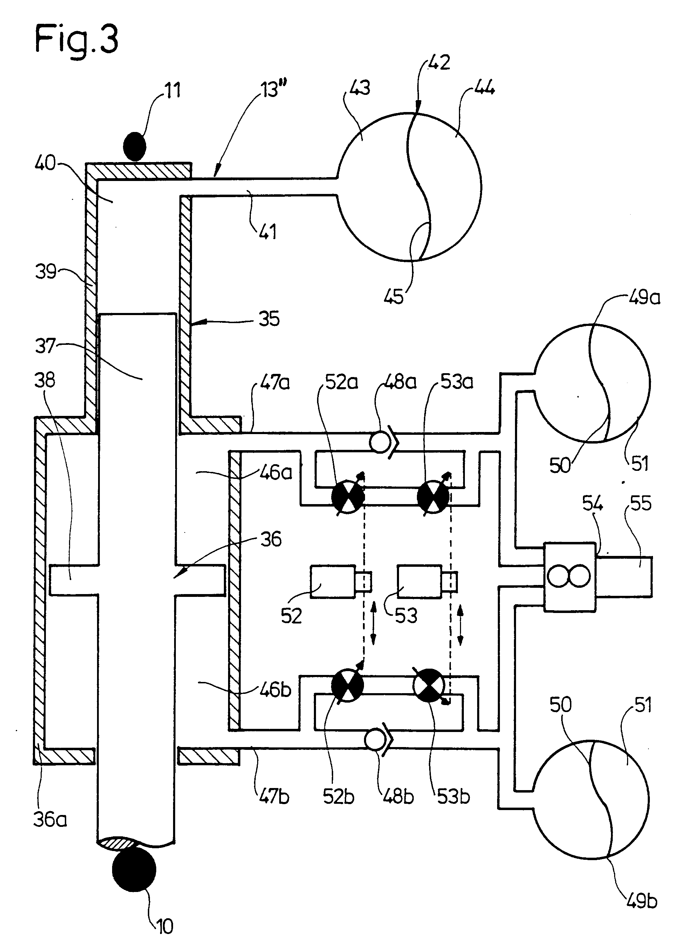

Im Gegensatz hierzu wird bei dem hydropneumatischen oder pneumatischen regelbaren Federelement entsprechenden Gegenstand der DE-A-2 604 809 so vorgegangen, daß sich in Abhängigkeit zu einer auf äußere Parameter reagierenden Ansteuerschaltung eine motorische, durch einen Stellmotor bewirkte Volumenveränderung im zweiten Druckraum ergibt, so daß je nach dem gewünschten Federungsverhalten (weich oder härter) ein dann entsprechend größeres oder kleineres Volumen für den Druckausgleich über eine Verbindungsleitung zur Verfügung gestellt wird. Da sich bei einer Volumenverringerung im zweiten Druckraum überschüssiges Druckmittel ergibt, setzt das bekannte regelbare Federelement eine zusätzliche, ansonsten aber unabhängige Niveauregelung zwingend voraus, über die dann Druckmittel abströmen kann, was in Fig. 3 dieser Veröffentlichung gezeigt ist. Im Gegensatz hierzu ist es aus Fig. 2 dieser Veröffentlichung auch schon bekannt, bei einem dann hydropneumatischen regelbaren Federelement die Verbindungsleitung zwischen den beiden, in ihren Volumina dann konstanten Druckräumen über ein Stellglied (Ventil) zu schließen oder zu öffnen, wobei das Stellglied ein Schieber sein kann und seinen Antrieb von einem Stellmotor mit einem Antriebsritzel erfährt, das mit einem Zahnrad kämmt. Das Zahnrad betätigt dann über ein Gewindeteil das Stellglied in Schließ- oder Öffnungsrichtung. Da auch die Volumenveränderung im zweiten Druckraum entsprechend dem weiter vorn erwähnten Ausführungsbeispiel der Fig. 3 nur allmählich über einen solchen Spindeltrieb erfolgen kann, sind insgesamt nur langsame Verstellbewegungen möglich, so daß schnelle Umschaltungen, beispielsweise zur Reaktion auf Notsituationen nicht realisiert werden können und mit einigem Aufwand nur solche adaptiven Anpassungen des Federungssystems in seinem Steifigkeitsverhalten realisiert werden können, wie dies in einfacherer Weise auch durch eine reine, langsam reagierende Niveauregelung möglich wäre.

Schließlich ist es in ähnlicher Weise wie bei dem Ausführungsbeispiel der Fig. 2 der DE-A-26 04 809 bei der DE-A-27 36 026 schon bekannt, bei einem verstellbaren Radaufhängungssystem für Fahrzeuge zwischen die beiden Druckräume, von denen einer unmittelbar mit der Radbewegung gekoppelt ist, ein schnelles Umschaltventil anzuordnen, welches zur Vermeidung gefährlicher Betriebszustände bei Kraftfahrzeugen (Beeinträchtigung von Laufstabilität oder Steuerbarkeit) die Federgesamtsteifigkeit dadurch verhärtet, daß die Verbindungsleitung zwischen den beiden Druckräumen unterbrochen und bei anders gearteten Betriebszuständen wieder geöffnet wird. Ein solches bekanntes verstellbares Radaufhängungssystem für Fahrzeuge entbehrt jedoch wiederum der Möglichkeit, durch ein adaptives Lernverhalten sich allmählich auf unterschiedliche Betriebszustände des Fahrzeugs einzustellen, denn bei einem Kraftfahrzeug muß im Betrieb erwartet werden, daß es sich für längere Zeit entweder auf ordnungsgemäßen, glatten Straßen fortbewegt, beispielsweise Autobahnen, oder auch auf holprigen Wegen bewegt wird, so daß sowohl eine adaptive Langzeiteinstellung des Federungsverhaltens erforderlich ist als auch eine schnelle Reaktion auf unter Umständen blitzartig einwirkende Betriebszustände wie Seitenwind nach Brückendurchfahrten u. dgl. oder schnelle Kurvenfahrt, wobei bei diesen letzteren Fahrzuständen eine sofortige Verhärtung des Federungssystems erforderlich ist.

Allgemein sind ferner noch Mittel zum Steuern der Federhärte bekannt (DE-C-16 30 058), wobei zwei Arbeitskammern eines Stoßdämpfers oder auch Federbeins über außenliegende Leitungen an eine Einrichtung angeschlossen sind, die aus einer Pumpe und zwei Speichern besteht. In den Verbindungsleitungen zu dem Federbein sind als Ventile lediglich einfach wirkende Rückschlagventile vorgesehen. Mit einer solchen Vorrichtung ist dann aber die Dämpferhärte eines solchen Stoßdämpfers nicht zu verändern, denn hierfür muß von außen - über die Pumpe - Energie zugeführt werden, was verhältnismäßig langsam erfolgt und einen gewissen Leistungsbedarf bedeutet. Die Steuerung lediglich der Dämpferhärte bei einem Stoßdämpfer ist ferner bekannt aus der DE-A-33 04 815.

Federungssysteme heute gebräuchlicher Fahrzeugtypen, insbesondere Personenfahrzeuge werden üblicherweise bezüglich der Federhärte und der Dämpferhärte auf einen mittleren Betriebsfall optimiert, wobei Parameter konstruktiv festgelegt werden und, abgesehen von Alterungserscheinungen, im Fahrbetrieb dann unverändert bleiben. Dies ist aber bei extremen Betriebsfällen, beispielsweise bei leerem Fahrzeug oder voll beladenem Fahrzeug oder bei sich ändernden Bewegungsparametern des Fahrzeugs (schnelle Kurvenfahrt, Bremsen, Beschleunigen, komfortable Autobahnfahrt u. dgl.) problematisch und jedenfalls nicht optimal.

Ferner können bei der vorliegenden Erfindung semi-aktive Dämpfer eingesetzt werden, wie dies aus der DE-OS 36 10 937 bekannt sind und die einen durch einen Kolben in zwei Arbeitskammern unterteilten Zylinder umfassen, wobei für die jeweilige Bewegungsrichtung (Zugstufe, Druckstufe) hintereinander oder parallel geschaltete gesteuerte hydraulische Drosselventile vorgesehen sind, denen jeweils ein in Gegenrichtung öffnendes Rückschlagventil parallelgeschaltet ist und sämtliche zu den Arbeitskammer-Anschlüssen abgewandten Anschlüsse der Ventile zusammengeführt sind, wodurch das Dämpfungssystem insgesamt und separat eine passive sowie eine semi-aktive Dämpfungsbeeinflussung durch entsprechende Ansteuerung der Ventile erfährt. Auf diese Veröffentlichung wird in Verbindung mit vorliegender Erfindung im übrigen ausdrücklich Bezug genommen, da die Einbeziehung solcher semi-aktiver Dämpferelemente wie dort beschrieben auch bei vorliegender Erfindung ergänzend zur Erzielung eines stabilen Systemverhaltens und einer gewünschten optimalen Funktion als Bestandteil der Gesamtbaugruppe vorgesehen ist. Diese, in der DE-OS 36 10 937 beschriebene semi-aktive Dämpfung kann ebenfalls mittels eines einzelnen, externen oder im Dämpfer integrierten Stellventils erzielt werden, welches in der Lage ist, hochfrequent Dämpferkräfte zu verstellen.

Schließlich wird noch verwiesen auf eine bekannte Vorrichtung zur aktiven Fahrwerksregelung bei Kraftfahrzeugen entsprechend DE-OS 37 38 284 , die auf der Basis bekannter Niveauregulierungen aufbaut und ein erstes in Abhängigkeit zum relativen Einfederweg beaufschlagtes aktives Stellglied für das Niveauregulierungssystem sowie ein zweites aktives Stellglied in Form eines aktiven oder eines soeben erwähnten semi-aktiven Dämpfers zwischen Radaufhängugn und Aufbau umfaßt, wobei beide aktive Stellglieder in einen gemeinsamen Regelkreis integriert sind, der sowohl den relativen Einfederweg als auch die vertikale Absolutgeschwindigkeit des Aufbaus zur Ansteuerung der beiden Stellglieder verwendet, hierfür jedoch einen erhöhten Energiebedarf benötigt, so daß der vorliegenden Erfindung die Aufgabe zu Grunde liegt, eine eine aktive Fahrwerksregelung ermöglichende Baugruppe zu schaffen, die gleichzeitig zur schnellen Niveauregulierung geeignet ist bzw. diese umfaßt und dabei nur einen extrem geringen Leistungsbedarf erforderlich macht.

### Vorteile der Erfindung

Die Erfindung löst diese Aufgabe mit den kennzeichnenden Merkmalen des Anspruchs 1 und hat den Vorteil, daß die durch die Erfindung ermöglichte Regelung der Aufbaubewegung eines Kraftfahrzeugs sowohl die üblichen Roll-, Hub- und Nickbewegungen des Aufbaus bei entsprechenden Fahrmanövern wie Bremsen, Kurvenfahrt u. dgl. reduziert als auch eine wesentliche Verbesserung von Fahrkomfort und Handling bietet. Dabei gelingt es ferner gleichzeitig neben der Regelung der Aufbaubewegungen, die auf dynamische Lastwechselvorgänge zurückzuführen sind, auch die Aufbauposition bei statischen Belastungsänderungen (Zuladung) zu korrigieren, also die Aufgabe konventioneller Niveauregulierungssysteme wahrzunehmen.

Dabei ist ferner von besonderem Vorteil, daß der im Vergleich zu voll aktiven, hydraulischen Fahrwerkssystemen ohnehin schon stark reduzierte Leistungsbedarf bei Systemen zur schnellen Niveauregulierung, wie sie aus der DE-OS 37 38 284 bekannt sind, durch geeignete Naßnahmen entscheidend weiter reduziert werden kann, wobei, um hier auch numerische Werte zu nennen, bei entsprechend geeigneter Auslegung der Komponenten der erfindungsgemäßen Saugruppe lediglich ein Leistungsbedarf von nur noch 20 %, verglichen mit dem Energiebedarf eines voll aktiven, hydraulischen Systems für die Aufbauregelung erforderlich ist.

Ein weiterer Vorteil besteht darin, daß die statischen und dynamischen Lastvariationen durch die erfindungsgemäße Aufbauregelung sicher beherrscht werden können, obwohl dieser eine äußerst weiche Gesamtfedercharakteristik zugrunde liegt, wodurch sich die Möglichkeit einer entscheidenden Verbesserung des Fahrkomforts anbietet. Trotz der weichen Federcharakteristik läßt sich aufgrund der Auslegung der vorgesehenen Stellglieder der Einfederweg minimal halten.

Es ist wesentlich, daß die vorliegende Erfindung als integralen Bestandteil bzw. der Aufbauregelung sozusagen innewohnend das Konzept einer schnellen Niveauregulierung mit umfaßt, die sich in Verbindung mit den aktiven Regelkomponenten ergibt, die die Regelung der Aufbaubewegung im Bereich der Aufbaueigenfrequenz unter dem Aspekt minimalen Energiebedarfs realisieren.

Die Erfindung ermöglicht auch einen sogenannten Fail-Safe-Betrieb, da bei Abschalten der schnellen Niveauregulierung, also bei Unterbrechung der Ansteuerung der vorhandenen, ansteuerungsfähigen Komponenten das Fahrzeug weiter betrieben werden kann aufgrund der weichen Grundabstimmung.

Da wie schon erwähnt nur ein sehr geringer Leistungsbedarf erforderlich ist, lassen sich für dessen Erzeugung und für die Ansteuerung und Schaltung des pneumatischen oder hydraulischen Druckmittels kostengünstige Komponenten verwenden, wobei das Druckniveau bei Anordnung eines hydraulischen Stellglieds bei ca. 80-120 bar und bei einem pneumatischen Stellglied bei ca. 8-10 bar liegt - es versteht sich aber, daß diese numerischen Werte die Erfindung lediglich erläutern und klarstellen, jedoch nicht als einschränkend zu verstehen sind, was auch für spätere, vergleichbare Angaben gilt.

Vorteilhaft ist ferner, daß bei vorliegender Erfindung nur der Aufbau geregelt wird, d.h. das vorgesehene aktive Stellglied und die damit zusammenhängenden Ventileinheiten müssen in einem Frequenzbereich von lediglich ca. 4-5 Hz betrieben werden, so daß die Komponentenanforderungen im Vergleich zu vollaktiven Systemen gering sind.

Ferner lassen sich aufgrund der vorgesehenen integrierten Kompensationsfeder die Anforderungen an das erforderliche Kraftniveau des Stellglieds drastisch reduzieren, was die Verwendung kleiner Stellglieder mit entsprechend kleinen Ventileinheiten ermöglicht. So entfallen die Anforderungen an aktive hydraulische Systeme, die beim Überfahren beispielsweise einer Schwelle große Ventilquerschnitte im Millisekundenbereich öffnen müssen, da eine im Stellglied integrierte weitere Feder derartige Beanspruchungen kompensiert.

Durch die kompakte Bauweise des Stellgliedes, welche aufgrund der durch geringe Anforderungen geringeren Bauteildimensionen möglich ist, gelingt es auch, dynamische Strömungseffekte in den Zuleitungen weitgehend zu vernachlässigen.

Ein weiterer Vorteil bei vorliegender Erfindung liegt schließlich darin, daß es aufgrund der geringeren Regelgeschwindigkeitsanforderungen möglich ist, speziell bei den vorgesehenen hydropneumatischen Stellgliedern anstelle von vorteilhafterweise möglichen Proportionalventilen kostengünstigere Schaltventile zu verwenden, wie sie beispielsweise auch bei der ABS-Regelung (Antiblockiersystem) eingesetzt werden, es braucht dann lediglich ein entsprechender Regelalgorithmus an diese Umschaltventile angepaßt zu werden.

Bei Ausbildung des Stellglieds sowohl in pneumatischer als auch in hydropneumatischer Form läßt sich das erforderliche Öldruckniveau oder Luftdruckniveau im Aktuator im Stellglied mittels einer im Kontroll- oder Steuervolumen angeordneten Feder entsprechend reduzieren.

Verglichen mit vollaktiven hydraulischen Systemen können daher die bei vorliegender Erfindung erforderlichen Bauteile wegen der geringeren Beanspruchung auch ein wesentlich geringeres Gewicht aufweisen; niedrige Druckniveaus und einfachere Ventile sowie geringere Anforderungen an die Versorgungseinheit, speziell im Fall der hydropneumatischen Ausbildung des Systems, erlauben eine vom Gewicht her günstige Komponentenauslegung.

Durch die in den Unteransprüchen aufgeführten Maßnahmen sind vorteilhafte Weiterbildungen und Verbesserungen der im Hauptanspruch angegebenen Erfindung möglich. Besonders vorteilhaft ist die Maßnahme, die Federrate der parallel zum Stellglied angeordneten Kompensationsfeder sowie die Federrate der Stellglied-Federcharakteristik in ihrer Summe so einzustellen, daß diese mit der für die charakteristische Aufbaueigenfrequenz des Fahrzeugs erforderlichen Gesamtfederrate übereinstimmen. Dabei trägt die extrem weich ausgelegte Kompensationsfeder den Großteil des statischen Gewichts des Aufbaus, während die härtere Stellgliedfeder den Rest des Aufbaugewichts an der jeweils betreffenden Radeinheit trägt, so daß je nach Anzahl der bei dem Kraftfahrzeug vorhandenen Räder eine entsprechende Anzahl von Baugruppen nach vorliegender Erfindung eingesetzt werden. Die Erfindung ermöglicht daher aufgrund der extrem weichen Fahrwerkabstimmung eine erhebliche Fahrtkomfortverbesserung, ohne daß sich hierdurch eine negative Wirkung auf den Einfederweg ergibt, der sich an der Stellgliedreaktion orientiert.

Da die erfindungsgemäße Vorrichtung in allen Radeinheiten eingesetzt und die einzelnen Baugruppen selbstverständlich unabhängig voneinander betrieben werden konnen, ist es daher auch möglich, durch gezielte unterschiedliche Regelungen der einzelnen Einheiten das transiente Verhalten des jeweils vorgesehenen Kraftfahrzeugs speziell bei instationärer Kurvenfahrt oder bei einem instationären Bremsvorgang in der Weise zu beeinflussen, daß beispielsweise ein unter- oder übersteuerndes Verhalten erzeugt werden kann, so daß sich durch die unterschiedliche Ansteuerung der einzelnen Baugruppen an den Radeinheiten eine entscheidende Verbesserung des Handlings ergibt.

### Zeichnung

Mehrere Ausführungsbeispiele der Erfindung sind in der Zeichnung dargestellt und werden in der nachfolgenden Beschreibung näher erläutert. Es zeigen:
- Fig. 1: schematisiert eine erste Ausführungsform einer Baugruppe zur aktiven Fahrwerksregelung bei Kraftfahrzeugen mit einer Luftfeder als Kompensationsfeder und einem pneumatischen Stellglied;
- Fig. 2: ebenfalls schematisiert eine der Darstellung der Fig. 1 vergleichbare Baugruppe mit einer konventionellen Stahlfeder als Kompensationsfeder, wobei bei beiden zusätzlich noch ein separater Stoßdämpfer in semi-aktiver Ausführungsform angeordnet ist und
- Fig. 3: die schematisierte Komplettdarstellung einer aktiven Fahrwerksregelung mit Niveauregulierung und unter Einschluß einer semi-aktiven Dämpfung für Zug- und Druckstufe.

### Beschreibung der Ausführungsbeispiele

Der Grundgedanke vorliegender Erfindung besteht darin, drei Bauelemente, von denen jedes auf mehrere Arten realisiert werden kann, parallel zueinander zwischen Aufbau und Rad eines Kraftfahrzeugs, hierdurch jeweils eine Radeinheit vervollständigend, anzuordnen, wobei zur Übernahme eines Großteils des Aufbaugewichts eine Kompensationsfeder als konventionelle Stahlfeder oder als Luftfederelement, zur Aufbauregelung dynamischer Lastschwankungen ein Stellglied hydraulischer oder pneumatischer Natur, aber auch als elektromechanisch verstellbarer Torsionsstab sowie ferner ein als paralleler semi-aktiver Stoßdämpfer wirkendes Bauelement vorgesehen ist, welches ein stabiles Systemverhalten sicherstellt und dessen passiver Dämpfungsanteil primär die Radbewegung speziell im Grenzbereich der Radeigenbewegung kontrolliert. Dies ist auch der Grund, warum das Stellglied mit seinen einzelnen Baukomponenten nur auf die Schwingungen des Fahrzeugaufbaus ausgelegt zu werden braucht, also selbst nur den Aufbau regelt und daher mit seinen zuordnenden Ventileinheiten lediglich einen Frequenzbereich von ca. 4-5 Hz bzw. in dieser Größenordnung liegend, beherrschen muß.

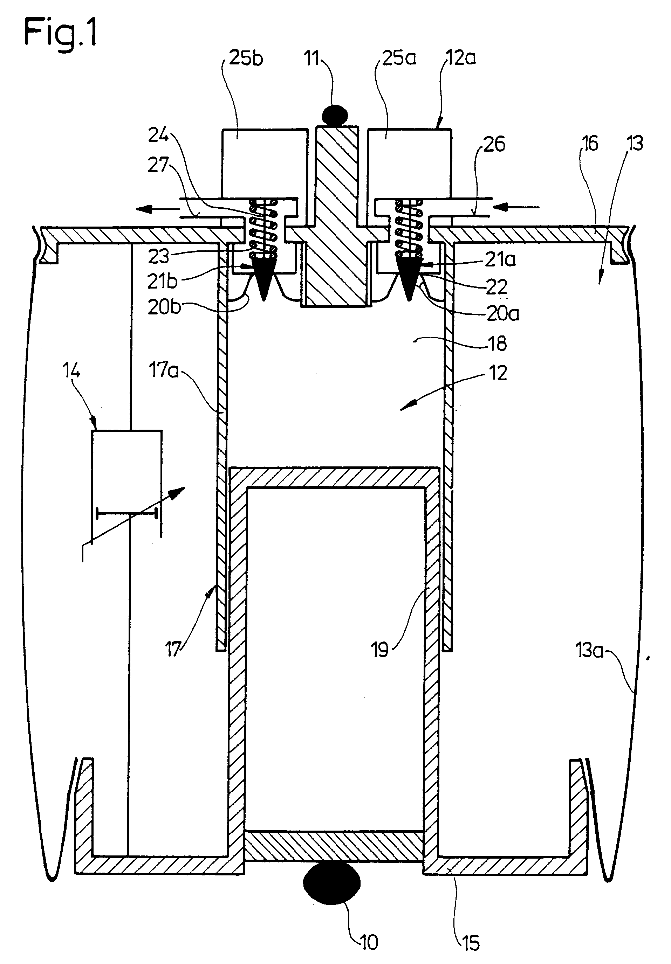

In allen drei Ausführungsformen der Figuren 1, 2 und 3 ist das Rad durch einen unteren größeren schwarzen Punkt mit 10, der Fahrzeugaufbau durch den oberen schwarzen Punkt angegeben und mit 11 bezeichnet. Zwischen Rad 10 und Aufbau 11 befindet sich die erfindungsgemäße Baugruppe, die aus den erwähnten drei Bauelementen besteht, nämlich, zunächst auf die Darstellung der Fig. 1 bezogen, einem bei dieser Ausführungsform pneumatischen Stellglied 12 einschließlich der mit diesem zusammenhängenden Ventileinheiten 12a, einer Kompensationsfeder 13, bei der Ausführungsform der Fig. 1 als Luftfeder konzipiert, sowie einem dritten Bauelement in Form eines sogenannten semi-aktiven Dämpfers, der nur schematisiert bei 14 angedeutet und im übrigen so ausgebildet sein kann und vorzugsweise auch ist, wie dies im einzelnen in der weiter vorn schon erwähnten DE-OS 36 10 937 , aber auch in der europäischen Patentanmeldung EP-A-0 197 317 umfassend erläutert ist, so daß unter Bezugnahme auf diese Vorveröffentlichungen bei der folgenden Erläuterung der Erfindung, auch aus Gründen eines besseren Verständnisses davon abgesehen wird, einen solchen semi-aktiven Dämpfer nochmals nach Struktur und Funktion zu erläutern.

Es versteht sich allerdings, daß für die Ansteuerung des semi-aktiven Dämpfers 14 sowie der Stellglied-Ventileinheiten ein zentrales elektrisches oder elektronisches Steuerorgan vorgesehen ist, welches in der Zeichnung nicht gesondert dargestellt zu werden braucht und dem eine Vielzahl von Betriebszuständen und weitere äußere Signalen über Sensoren zugeführt werden, beispielsweise Angaben über die relative Geschwindigkeit der beiden Körper (Rad 10 und Aufbau 11) zueinander, über die absoluten Geschwindigkeiten dieser beiden Körper, über Beladungszustand, Lastverteilung der Achsen, Fahrgeschwindigkeit, Beschleunigungen in den Längs- und Querrichtungen, Fahrbahnunebenheiten, Lenkausschläge u. dgl. Das zentrale Steuerorgan verarbeitet diese Signale sowie gegebenenfalls noch weitere, auch aus internen Speichern abgerufene Informationen vorteilhafterweise im Sinne vorgegebener, ebenfalls gespeicherter Programme und steuert die jeweiligen Ventileinheiten auch im Bereich des semi-aktiven Stoßdämpfers so an, daß sich die gewünschten Fahrtzustände ergeben. Hierauf braucht nicht weiter eingegangen zu werden, da sich die vorliegende Erfindung mit der Anordnung und Zuordnung der einzelnen Komponenten und ihrer Ausgestaltung ausschließlich beschäftigt.

Prinzipiell sind alle drei Bauelemente bei allen Ausführungsformen der Figuren 1, 2 und 3 parallel zwischen Aufbau und Radaufhängung angeordnet, wobei die Kompensationsfeder 13, 13', 13'' (siehe auch die anderen Figuren) die Aufgabe übernimmt, den Großteil des Aufbaugewichts, der auf der betreffenden Aufhängungseinheit lastet, zu kompensieren und zu übernehmen.

Bei der Fig. 1 ist die Kompensationsfeder als Luftfeder 13 ausgebildet und umfaßt eine Balgstruktur 13a, die an einem unteren radfesten Lagerteil 15 und an einem oberen, aufbaufesten Lagerteil 16 abgedichtet befestigt ist, wie dies bei Luftfedern allgemein üblich ist, so daß bei einer Einfederung der Balg eine entsprechende Abrollbewegung durchführt. Das sich innerhalb des Balges befindliche Druckmittel kann beispielsweise Luft sein.

Unteres Lagerteil 15 und oberes Lagerteil 16 können ferner, auch einstückig, Bestandteile eines Kolben/Zylinderaggregats 17 sein, welches Bestandteil des pneumatischen Stellglieds 12 ist und bei dem die Zylinderform 17a eine Arbeitskammer 18 bildet, von der die in der Zylinderform 17a gleitende Kolbenstruktur 19 eine Wand begrenzt.

In die Arbeitskammer 18 öffnen sich an beliebiger Stelle, bei der Fig. 1 von oben, die Einlaß- und Auslaßöffnungen 20a, 20b eines Einlaßventils 21a und eines Auslaßventils 21b. Einlaßventil 21a und Auslaßventil 21b können grundsätzlich von beliebiger Form und Struktur sein; bei dem dargestellten Ausführungsbeispiel sind konisch verlaufende Ventilkörper 22 vorgesehen, die gegen die von den Einlaß- und Auslaßöffnungen 20a, 20b gebildeten Sitzen anliegen, unter der Vorspannung von an ihren Rückseiten angreifenden Federn 23 stehen und über eine Art Kolbenstange 24 mit einem elektromagnetischen Schaltsystem, vorzugsweise in Form von Stellmagneten 25a, 25b in Verbindung stehen, die die Öffnungs- und Schließbewegungen der Einlaß- und Auslaßventile steuern, in Abhängigkeit von den den Stellmagneten 25a, 25b zugeführten Ansteuersignalen der zentralen Logikeinheit. Hierzu sind noch äußere Anschlüsse vorgesehen, nämlich ein Eingangsanschluß 26, der mit einer nicht dargestellten, in der üblichen Weise ausgebildeten pneumatischen Druckversorgung verbunden ist, sowie ein Ausgangsanschluß 27, der den Rückstrom des pneumatischen Stellglieds 12 aufnimmt.

Es versteht sich, daß der in der Fig. 1 innerhalb der Luftfeder gezeichnete semi-aktive Dämpfer 14 sich im praktischen Ausführungsbeispiel natürlich nicht an dieser Stelle befindet und lediglich aus Platzgründen dort angegeben ist.

Da das Ausführungsbeispiel der Fig. 2 bis auf die Realisierung der drei Bauelemente in unterschiedlicher Form, mit dem der Fig. 1 vergleichbar ist, wird auf die Fig. 2 sofort eingegangen, wobei die Bezugszeichen der dortigen Komponenten die gleiche Nummer tragen, lediglich zur Unterscheidung mit einem Beistrich oben.

Die Kompensationsfeder ist hier als Stahlfeder 13' ausgebildet, kann aber natürlich auch als Luftfederelement realisiert werden, wie ja schon in Fig.1 gezeigt.

Da allen Stellgliedern die Eigenschaft gemeinsam ist, daß sie zwischen ihren Befestigungspunkten als der Kompensationsfeder 13, 13', 13'' parallel geschaltete Federelemente agieren, ist das in Fig. 2 vorgesehene hydraulische Stellglied 12' mit einem zusätzlichen Federelement 28 in Reihe geschaltet, während rein pneumatische Stellglieder wie in Fig. 1 die Federelement-Anforderungen automatisch erfüllen, da pneumatische Zylinder/Kolbenelemente grundsätzlich eine federartige Charakteristik besitzen.

Das in Fig. 2 gezeigte hydraulische Stellglied 12' stellt eine starre Verbindung zwischen seinen Befestigungspunkten dar, deren Länge geregelt werden kann, und zwar durch eine entsprechende Ansteuerung auch hier wieder vorgesehener Einlaß- bzw. Auslaßventile 21a', 21b'. Das in Serie mit dem hydraulischen Stellglied geschaltete Federelement 28 ist bei dem in Fig. 2 gezeigten Ausführungsbeispiel als Luftfeder realisiert; es kann sich aber auch um eine Stahlfeder handeln. Tatsächlich ist dieses zusätzliche Federelement 28 deshalb notwendig, da sonst ein derartiges hydropneumatisches Stellglied zu einem Stellglied wie bei voll aktiven hydraulischen Fahrwerken degenerieren würde, welches sowohl hinsichtlich der Aufbaubewegung als auch der Radbewegung geregelt werden muß und dann die erwähnten extrem hohen Leistungsanforderungen stellen würde.

Die hier vorgesehene zusätzliche Feder 28 trägt den Radbewegungen Rechnung und erlaubt, daß das eigentliche Stellelement 12, 12', wie auch in Fig. 1, ausschließlich die Aufbaubewegung regelt; dabei wird die Radbewegung speziell im Frequenzbereich der Radeigenfreguenz tatsächlich primär vom frequenzabhängigen passiven Dämpfungsanteil des semiaktiven Dämpfers 14 kontrolliert.

Der Aufbau des hydraulischen Stellglieds 12' der Fig. 2 umfaßt ebenfalls ein Kolbenzylinderaggregat 17' mit einem Kolben 19', dessen eine Wand den Arbeitsraum 18' des so gebildeten Aktuators begrenzt. Der Kolben setzt sich über eine Kolbenstange 29 nach unten fort, die einstückig in den oberen Lagerteller 30 für das zusätzliche Federelement übergeht, die als Luftfeder mit Rollbalg 28a ausgebildet ist. Ein unteres, mit dem Rad fest verbundenes Lagerteil 15' bildet auf der anderen Seite des Luftfederelements die Haltestruktur für den Rollbalg 28a.

Innerhalb der Arbeitskammer 18' des Aktuators des hydraulischen Stellglieds 17' kann sich noch eine zusätzliche Unterstützungsfeder 31 befinden; auch hier öffnet sich in den Arbeitsraum der Einlaß 20a' des Einlaßventils 21a, welches mit einer hydraulischen Druckversorgung über den Anschluß 26' in Verbindung steht, sowie eine Auslaßöffnung 20b', die vom Auslaßventil 21b' gesteuert ist und von diesem mit dem Rücklaufanschluß 27' verbunden wird.

Um hier über hinreichendes hydraulisches Druckmittel zu verfügen, ist das eigentliche Zylinder/Kolbenaggregat 17' des hydraulischen Stellglieds 12' von einem hydraulischen Druckspeicher 32 umgeben, der über eine Trennwand 33 in einen pneumatischen Druckspeicherbereich 34 übergeht, wobei die Druckversorgung unmittelbar mit dem Druckspeicher 32 verbunden ist, aus welchem das Einlaßventil 21a' das Druckmittel zur Arbeitskammer 18' zuläßt.

Es versteht sich, daß die in den Stellgliedern integrierten bzw. diesen zugeordneten Federelemente 28, 31 in Übereinstimmung mit der gesamten Federcharakteristik einer Federungseinheit und in Abhängigkeit zu dem von der Kompensationsfeder bereitgestellten Anteil der Gesamtfedercharakteristik ausgelegt werden.

Bei dem pneumatischen Stellglied-System nach Fig.1 muß ein bestimmter Anteil des Aufbaugewichts vom Stellglied getragen werden, so daß die dortige Kompensationsfeder als Luftfeder 13 nicht das komplette Aufbaugewicht tragen darf. Dies ist zum einen erforderlich, um eventuell gewünschte Absenkungen des Aufbaus (geschwindigkeits- oder fahrbahnabhängig) zu ermöglichen, zum anderen bedarf eine bestimmte Federcharakteristik einer Luftfeder einer bestimmten Vorbelastung bzw. eines bestimmten Ausgangsdrucks. Wird allerdings, was ebenfalls möglich ist, als Stellglied ein beispielsweise elektromechanisch verstellbarer Torsionsstab oder sonstige Federelemente als Stellglied verwendet, dann ist dies nicht erforderlich, da die Federcharakteristik in diesem Fall unabhängig von der Vorspannung ist.

Wie erwähnt wirkt in beiden Fällen der Figuren 1 und 2 der parallel zur Kompensationsfeder und zum Stellglied angeordnete semi-aktive Dämpfer als stabilisierendes Element und ist für das Systemverhalten insgesamt erforderlich.

Im Unterschied zu den Ausführungsformen der Figuren 1 und 2 ist bei der in Fig. 3 gezeigten Baugruppe der semi-aktive Dämpfer zwar als parallel wirkendes drittes Element vorhanden, jedoch so in den Bereich des Stellglieds integriert, daß sich bei spezieller Ausbildung ein einheitliches, integrales Grundkonzept realisieren läßt, wie gezeigt.

Fig. 3 zeigt in parallel geschalteter Wirkung zwei Kolben/Zylinderaggregate 35 und 36, wobei beide Aggregate so zusammenhängen, daß ein gemeinsamer Kolben 37 im unteren Bereich der Fig. 3 gleichzeitig Stellglied- und Dämpferfunktionen erfüllt, mit einem erweiterten, den eigentlichen Kolben bildenden Ringvorsprung 38, während in Verlängerung nach oben der Kolben 37 in einem verjüngten Zylinderbereich 39 gleitet und hier in Verbindung mit einem oberen Arbeitsraum 40 eine hydro-pneumatische Feder bildet, die über einen Verbindungskanal 41 mit einem Vorratsbehälter 42 verbunden ist, der bei 43 ein Hydraulikfluid und bei 44, durch eine Trennwand 45 geteilt, komprimiertes Gas, beispielsweise Luft enthält, die als Federelement für die so realisierte Kompensationsfeder 13'' wirkt.

Der Ringvorsprung 38 unterteilt den im Umfang größeren Zylinder 36a des unteren Zylinder/Kolbenaggregats für Stellglied- und semi-aktive Dämpfungs-Realisierung in eine obere Druckstufen-Arbeitskammer 46a und in eine untere Zugstufen-Arbeitskammer 46b. Jede Arbeitskammer ist über einen Verbindungskanal 47a, 47b und ein sich in Gegenrichtung öffnendes Rückschlagventil 48a, 48b mit einem Ausgleichsvolumenbehälter 49a für die Druckstufe und 49b für die Zugstufe verbunden, wobei insgesamt ein hydraulisches Druckmittel in den Arbeitskammern bis zu den beiden Behältern 49a, 49b und in sämtlichen Ventileinheiten vorhanden ist, während die Behälter zum Druckausgleich in der üblichen Weise, jeweils über eine Trennwand 50 abgetrennt, ein hinteres Luftvolumen 51 noch einschließen.

Wesentlich ist für die Realisierung semi-aktiver Dämpfungs- und Stellgliedeigenschaften wie in Fig.3 dargestellt, daß parallel zu den Rückschlagventilen 48a, 48b die Serienschaltung jeweils zweier Ventile 52a, 53a für die Druckstufe bzw. 52b, 53b für die Zugstufe vorgesehen sind, die als Proportionalventile oder als schnelle Umschaltventile dann mit entsprechendem Regelalgorithmus ausgebildet die Druckmittelsteuerung zu und aus den jeweiligen Druckstufen- und Zugstufenarbeitskammern übernehmen.

Hierzu sind gemeinsame Steuereinheiten für einander zugeordnete Ventile in den beiden Parallelzweigen vorgesehen, und zwar eine Steuereinheit 52 für die beiden Ventile 52a (Druckstufe) und 52b (Zugstufe) und eine Steuereinheit 53 für die Ventile 53a (Druckstufe) und 53b (Zugstufe. Wesentlich insbesondere auch für die Realisierung der semi-aktiven Dämpfungseigenschaften so, wie dies in der weiter vorn schon erwähnten DE-OS 36 10 937 ausführlich erläutert ist, ist der Umstand, daß die Steuereinheit 52 den aktiven Komponentenanteil und die Steuereinheit 53 den passiven Komponentenanteil der semi-aktiven Dämpferverstellung beeinflußt, wobei ferner noch darauf hinzuweisen ist, daß die beiden "aktiven" Ventile 52a, 52b gleichsinnig, die beiden "passiven" Ventile 53a, 53b hingegen gegensinnig geregelt werden. Die Steuereinheiten 52,53 können mechanisch oder elektronisch realisiert sein.

Der Aufbau der Stellglied/Dämpfungskombination vervollständigt sich schließlich durch eine Hydraulikpumpe 54 ohne Leckstrom, die von einem selbsthemmenden Antrieb 55 angetrieben ist. Hierdurch ergibt sich der Bereich einer Niveauregulierungseinheit im Zusammenwirken mit der gezielten Ansteuerung der Ventilgruppen 52a, 53a bzw. 52b, 53b.

Die Niveauregulierung erfolgt daher durch Anheben bzw. Absenken des Druckniveaus in den jeweiligen Druckstufen- bzw. Zugstufen-Arbeitskammern mittels der Pumpe 54, während Stellglied-und Dämpferfunktion kombiniert durch die gezielte Ansteuerung der Ventilgruppen 52a, 52b, 53a, 53b realisiert wird.

Der Erfindung gelingt hierdurch bei allen Ausführungsformen die Realisierung einer schnellen Niveauregulierung mit extrem geringem Leistungsbedarf bei gleichzeitiger aktiver Fahrwerksregelung durch den Einsatz einer entsprechend abgestimmten Kompensationsfeder, die parallel zu dem eine eigene Federcharakteristik aufweisenden Stellglied angeordnet ist. Die Summe der beiden Federraten muß mit der für die charakteristische Aufbaueigenfrequenz des Fahrzeugs erforderlichen Gesamtfederrate übereinstimmen, wobei die Stellgliedfeder wesentlich härter als die Kompensationsfeder ausgelegt ist, die in ihrer Federsteifigkeit so niedrig wie technisch realisierbar zu bestimmen ist. Je größer nämlich der Anteil der statischen Last ist, welche von der Kompensationsfeder getragen wird und je niedriger ihre Federsteifigkeit ist, umso geringer ist der Energiebedarf für die Aufbauregelung bei dynamischen Lastschwankungen.

## Patentansprüche

1. Vorrichtung zur aktiven Regelung von Aufbaubewegungen bei Kraftfahrzeugen zur Reduktion von unerwünschten Fahrzeugbewegungen und zur Niveauregulierung, wobei eine vom Kraftfahrzeug-Aufbau (11) belastete Kompensationsfeder (13, 13', 13'') und parallel dazu ein Stellglied (12, 12'), das zur Erzeugung von Zusatzkräften dient, vorgesehen sind und wobei eine Dämpfereinheit (14) gebildet ist, dadurch gekennzeichnet, daß die Kompensationsfeder (13, 13', 13'') sehr weich ist, das Stellglied eine eigene, zur Kompensationsfeder härtere Federungscharakteristik besitzt und daß die Dämpfereinheit (14) parallel wirkend zu diesen beiden Elementen (12, 12', 13, 13', 13'') angeordnet und semi-aktiv verstellbar ist.

2. Vorrichtung nach Anspruch 1, dadurch gekennzeichnet, daß die Kompensationsfeder eine Luftfeder (13), eine Stahlfeder (13') oder eine hydropneumatische Feder (13'') ist und ihre eigene, extrem weiche Federcharakteristik in Verbindung mit der Federelementcharakteristik des Stellglieds (12, 12') so bemessen ist, daß die Summe beider Federraten in etwa mit der für die charakteristische Aufbaueigenfrequenz des Fahrzeugs erforderlichen Gesamtfederrate übereinstimmt.

3. Vorrichtung nach Anspruch 1 oder 2, dadurch gekennzeichnet, daß bei Ausbildung des Stellglieds als pneumatisches Stellglied (12), dieses von einem Zylinder/Kolbenaggregat (17) gebildet ist, dessen mit dem Rad verbundener Kolben (19) eine Wand einer Arbeitskammer (18) begrenzt, die über ein von einer zentralen Logikschaltung ansteuerbares Einlaßventil (21a) mit einer Druckversorgung und über ein von der gleichen Logikschaltung ansteuerbares Auslaßventil (21b) mit einem Rückstromanschluß (27) verbunden ist (Fig. 1).

4. Vorrichtung nach Anspruch 1 oder 2, dadurch gekennzeichnet, daß bei Ausbildung des Stellglieds (12') als hydraulisches Stellglied dieses mit einem weiteren Federelement (Luftfeder 28) in Reihe geschaltet ist und eine hydraulische Arbeitskammer (18') aufweist, die über ein Einlaßventil (21a') von einem Druckspeicher (32) mit hydraulischem Druckmittel beaufschlagt ist, welches über ein Auslaßventil (21b') aus der Arbeitskammer (18') in den Rücklauf (27') abfließt, wobei Einlaß- und Auslaßventil von einer zentralen Logikschaltung angesteuert sind (Fig. 2).

5. Vorrichtung nach einem der Ansprüche 1-4, dadurch gekennzeichnet, daß die semi-aktive Dämpfereinheit (14) zu Kompensationsfeder (13, 13') und Stellglied (12, 12') parallel geschaltet ist und zwei durch einen Kolben in eine Zugstufen-Arbeitskammer und in eine Druckstufen-Arbeitskammer unterteilte Kammern aufweist, die entweder miteinander über zueinander unabhängig ansteuerbare Drosselventile verbunden sind, wobei auf die absolute Geschwindigkeit von Rad und Aufbau bezogene aktive Dämpfungssignale die Drosselventile im Sinne einer Differentialwirkung und auf die Relativgeschwindigkeit von Rad und Aufbau bezogene passive Dämpfungssignale die Drosselventile jeweils für beide Bewegungsrichtungen (Zugstufe, Druckstufe) gleichsinnig beeinflussen, oder durch ein hochfrequent betätigbares, schnelles Dämpferventil zur Realisierung der semi-aktiven Dämpferfunktion verbunden sind, welches als Kraftstell- oder Drosselstellelement ausgeführt sein kann.

6. Vorrichtung nach einem oder mehreren der Ansprüche 1-5, dadurch gekennzeichnet, daß eine einheitliche, gemeinsam Stellglied- und Dämpfungsfunktionen realisierende Stelleinheit vorgesehen ist, mit zwei Arbeitskammern (46a, 46b) jeweils für die Druckstufe und die Zugstufe, die über zu Rückschlagventilen (48a, 48b) parallel geschaltete, ihrerseits in Reihe liegende Ventile (52a, 53a; 52b, 53b) mit einer Druckversorgung verbunden sind (Fig. 3).

7. Vorrichtung nach Anspruch 6, dadurch gekennzeichnet, daß parallel zu der Stellglied- und Dämpfungseinheit wirkend eine hydro-pneumatische Feder (13'') geschaltet ist.

8. Vorrichtung nach Anspruch 6 oder 7, dadurch gekennzeichnet, daß die hydro-pneumatische Feder von einem Zylinder/Kolbenaggregat (35) gebildet ist, dessen hydraulische Arbeitskammer (40) mit einem Vorratsbehälter (42) verbunden ist, der neben dem Hydraulikfluid ein komprimiertes Gaskissen (44) enthält.

9. Vorrichtung nach Anspruch 6, 7 oder 8, dadurch gekennzeichnet, daß die kombinierte Stellglied- und Dämpfungseinheit aus einem gemeinsamen Zylinder/Kolbenaggregat (36) besteht, dessen verlängerte Kolbenstange gleichzeitig den Kolben des Zylinder/Kolbenaggregats (35) für die hydro-pneumatische Feder (13'') bildet.

10. Vorrichtung nach einem der Ansprüche 6 bis 9, dadurch gekennzeichnet, daß das Zylinder/Kolbenaggregat (36) der kombinierten Stellglied/Dämprungseinheit einen Zylinderraum mittels eines äußeren Ringvorsprungs (30) in eine obere Druckstufen-Arbeitskammer (46a) und eine untere Zugstufen-Arbeitskammer (46b) unterteilt, deren Anschlüsse über Verbindungsleitungen (47a, 47b) mit in diesen enthaltenen Rückschlagventilen (48a, 48b) jeweils mit eigenen Ausgleichsvolumen-Druckstufen- und Ausgleichsvolumen-Zugstufenvorratsbehältern (49a, 49b) verbunden sind, wobei parallel zu den Rückschlagventilen (48a, 48b) die Reihenschaltung von ansteuerbaren Drosselventilen (52a, 53a; 53a, 53b) geschaltet sind, wobei jeweils erste Drosselventile (52a, 52b) gemeinsam gleichsinnig zur Regelung und Dämpferverstellung der aktiven Komponente und zweite Drosselventile (53a, 53b) jeweils gegensinnig gemeinsam zur Regelung der passiven Dämpfungskomponente von Ansteuereinheiten (52, 53) angesteuert und geschaltet sind.

11. Vorrichtung nach einem der Ansprüche 6 bis 10, dadurch gekennzeichnet, daß die zur Druckstufen-Arbeitskammer (46a) und Zugstufen-Arbeitskammer (46b) jeweils führenden Leitungen (47a, 47b) ferner mit einer hydraulisches Druckmittel fördernden Hydraulikpumpe (54) verbunden sind.

12. Vorrichtung nach Anspruch 11, dadurch gekennzeichnet, daß die das hydraulische Druckmittel fördernde Pumpe eine Hydraulikpumpe ohne Leckstrom ist und von einem selbsthemmenden Antrieb (55) angetrieben wird, derart, daß mittels der Pumpe durch selektives Anheben und Abheben des Druckniveaus in den jeweiligen Arbeitskammern die Niveauregulierung erfolgt.

13. Vorrichtung nach einem oder mehreren der Ansprüche 1-12, dadurch gekennzeichnet, daß zur Ansteuerung der verschiedenen Ventileinheiten (21a, 21b; 21a', 21b'; 52a, 52b; 53a, 53b) von pneumatischem bzw. hydraulischem Stellglied (13, 13') oder der Stellglied/Dämpferfunktionseinheit eine zentrale Logikschaltung vorgesehen ist, der Sensorsignale über die relative Geschwindigkeit von Aufbau und Rad, die absoluten Geschwindigkeiten von Aufbau und Rad, Beladungszustand, Lastverteilung der Achsen, Fahrgeschwindigkeit, Beschleunigungen in Längs- und Querrichtung des Fahrzeugs sowie Fahrbahnunebenheiten, Lenkungsausschlägen u. dgl. zugeführt sind und die die jeweiligen Ventilantriebe (Stellmagnete 25a, 25b; Steuereinheiten 52, 53) ansteuert.

## Claims

1. Appliance for the active control of superstructure motions in motor vehicles in order to reduce undesirable vehicle motions and for level control, a compensation spring (13, 13', 13'') loaded by the motor vehicle superstructure (11) being provided and, parallel to it, a setting element (12, 12') which is used for generating additional forces, and a damper unit (14) being formed, characterized in that the compensation spring (13, 13', 13'') is very soft, the setting element has its own spring characteristic, which is stiffer than that of the compensation spring, and in that the damper unit (14) is arranged so that it acts in parallel with these two elements (12, 12', 13, 13', 13'') and can be adjusted semi-actively.

2. Appliance according to Claim 1, characterized in that the compensation spring is a pneumatic spring (13), a steel spring (13') or a hydro-pneumatic spring (13'') and its own, extremely soft spring characteristic is so dimensioned in association with the spring element characteristic of the setting element (12, 12') that the sum of the two spring rates agrees approximately with the total spring rate necessary for the characteristic natural frequency of the vehicle superstructure.

3. Appliance according to Claim 1 or 2, characterized in that in the configuration of the setting element as a pneumatic setting element (12), the latter is formed by a cylinder/piston unit (17) whose piston (19) connected to the wheel bounds a wall of a working chamber (18) [sic], which is connected to a pressure supply via an inlet valve (21a) which can be activated by a central logic circuit and to a return flow connection (27) via an outlet valve (21b) which can be activated by the same logic circuit (Fig. 1).

4. Appliance according to Claim 1 or 2, characterized in that in the configuration of the setting element (12') as a hydraulic setting element, the latter is connected in series with a further spring element (pneumatic spring 28) and has a hydraulic working chamber (18') which is subjected to hydraulic pressure medium from a pressure reservoir (32) via an inlet valve (21a'), which pressure medium flows off via an outlet valve (21b') from the working chamber (18') into the return (27'), the inlet and outlet valves being activated by a central logic circuit (Fig. 2).

5. Appliance according to one of Claims 1-4, characterized in that the semi-active damper unit (14) is connected in parallel with the compensation spring (13, 13') and the setting element (12, 12') and has two chambers divided by a piston into a tension stage working chamber and a compression stage working chamber, which chambers are either connected together by means of throttle valves which can be activated independently of one another, the throttle valves being influenced in the sense of a differential effect by the active damping signals related to the absolute velocity of wheel and superstructure, and the throttle valves being respectively influenced in the same sense for both directions of motion (tension stage, compression stage) by the passive damping signals related to the relative velocity of the wheel and the superstructure, or are connected by a rapid damper valve which can be actuated by a high frequency in order to effect the semi-active damper function, which damper valve can be embodied as a power setting or throttle setting element.

6. Appliance according to one or more of Claims 1-5, characterized in that a uniform, setting unit which jointly realizes setting element and damping functions, is provided, which setting unit has two working chambers (46a, 46b) for the compression stage and the tension stage respectively, which chambers are connected to a pressure supply via valves (52a, 53a; 52b, 53b) which are connected in parallel with non-return valves (48a, 48b) and are themselves located in series (Fig. 3).

7. Appliance according to Claim 6, characterized in that a hydro-pneumatic spring (13'') is connected acting in parallel with the setting element and damping unit.

8. Appliance according to Claim 6 or 7, characterized in that the hydro-pneumatic spring is formed by a cylinder/piston unit (35) whose hydraulic working chamber (40) is connected to a storage container (42) which contains a compressed gas cushion (44) in addition to the hydraulic fluid.

9. Appliance according to Claim 6, 7 or 8, characterized in that the combined setting element and damping unit consists of a common cylinder/piston unit (36) whose extended piston rod simultaneously forms the piston of the cylinder/piston unit (35) for the hydropneumatic spring (13'')

10. Appliance according to one of Claims 6 to 9, characterized in that the cylinder/piston unit (36) of the combined setting element/damping unit divides a cylinder space by means of an outer annular protrusion (30) into an upper compression stage working chamber (46a) and a lower tension stage working chamber (46b) whose connections are respectively connected by means of connecting conduits (47a, 47b), which contain non-return valves (48a, 48b), to their own compensation volume compression stage and compensation volume tension stage storage containers (49a, 49b) respectively, the series connection of throttle valves (52a, 53a; 53a, 53b), which can be activated, being connected in parallel with the non-return valves (48a, 48b), first throttle valves (52a, 52b) being respectively jointly activated and connected in the same sense for the control and damper adjustment of the active component and second throttle valves (53a, 53b) being respectively activated and connected jointly but oppositely for the control of the passive damping component of activation units (52, 53).

11. Appliance according to one of Claims 6 to 10, characterized in that the respective conduits (47a, 47b) leading to the compression stage working chamber (46a) and tension stage working chamber (46b) are also connected to a hydraulic pump (54) delivering hydraulic pressure medium.

12. Appliance according to Claim 11, characterized in that the pump delivering the hydraulic pressure medium is a hydraulic pump without leakage flow and is driven by a self-locking drive (55) in such a way that the level control takes place by means of the pump by selective raising and lowering of the pressure level in the respective working chambers.

13. Appliance according to one or more of Claims 1-12, characterized in that in order to activate the various valve units (21a, 21b; 21a', 21b'; 52a, 52b; 53a, 53b) of the pneumatic or hydraulic setting element (13, 13') or the setting element/damper function unit, a central logic circuit is provided to which are supplied sensor signals on the relative velocity of superstructure and wheel, on the absolute velocities of the superstructure and the wheel, on the loading condition, driving the axle load distribution, on the driving speed, on accelerations in the longitudinal and transverse directions of the vehicle and on unevennesses in the roadway, on steering deflections and the like, and which activates the respective valve drives (setting magnets 25a, 25b; control units 52, 53).

## Revendications

1. Dispositif de régulation active des mouvements de la caisse de véhicules automobiles pour réduire les mouvements non souhaités du véhicule et pour réguler l'assiette, comprenant un ressort de compensation (13, 13', 13'') chargé par la caisse (11) du véhicule et, en parallèle, un élément de réglage (12, 12') servant à créer des forces supplémentaires en formant un élément amortisseur (14), dispositif caractérisé en ce que le ressort de compensation (13, 13', 13'') est très souple, l'élément de réglage possède sa propre caractéristique de ressort, plus dure que celle du ressort de compensation, et l'amortisseur (14) monté de façon à fonctionner en parallèle aux deux éléments (12, 12', 13, 13', 13'') est réglable de manière semi-active.

2. Dispositif selon la revendication 1, caractérisé en ce que le ressort de compensation est un ressort à air (13), un ressort en acier (13') ou un ressort hydropneumatique (13'') et sa propre caractéristique de ressort, extrêmement souple, est dimensionnée, en combinaison avec la caractéristique de l'élément de ressort de l'élément de réglage (12, 12'), pour que la somme des deux coefficients de ressort corresponde sensiblement au coefficient de ressort global nécessaire pour la fréquence propre caractéristique de la caisse du véhicule.

3. Dispositif selon la revendication 1 ou 2, caractérisé en ce que, pour un élément de réglage constitué par un élément pneumatique (12), cet élément est formé d'un ensemble cylindre/piston (17) dont le piston (19) relié à la roue délimite une cloison d'une chambre (18) reliée par une soupape d'entrée (21a) commandée par une logique centrale, à une alimentation en pression, et par une soupape de sortie (21b) commandée par la même logique, à un raccord de retour (27) (figure 1).

4. Dispositif selon la revendication 1 ou 2, caractérisé en ce que lorsque l'élément de réglage (12') est constitué par un élément de réglage hydraulique, il est branché en série avec un autre élément à ressort (ressort à air 28) et comporte une chambre de travail hydraulique (18') sollicitée par le fluide hydraulique sous pression d'un accumulateur de pression (32) à travers une soupape d'entrée (21a'), le fluide passant par une soupape de sortie (21b') de la chambre de travail (18') dans le retour (27'), la soupape d'entrée et la soupape de sortie étant commandées par une logique centrale (figure 2).

5. Dispositif selon l'une des revendications 1 à 4, caractérisé en ce que l'élément amortisseur semi-actif (14) monté en parallèle au ressort de compensation (13, 13') et à l'élément de réglage (12, 12') comporte deux chambres séparées par un piston en une chambre de l'étage de traction et une chambre de l'étage de compression, ces chambres étant soit reliées par des soupapes d'étranglement commandées indépendamment, les signaux d'amortissement actifs, dépendant de la vitesse absolue de la roue et de la carrosserie, influençant les soupapes d'étranglement dans le sens d'un fonctionnement différentiel et des signaux d'amortissement passifs rapportés à la vitesse relative de la roue et de la caisse, influençant en sens opposé les soupapes d'étranglement respectives pour chacun des deux sens de mouvements (étage de traction, étage de compression), soit reliées par une soupape d'amortissement rapide actionnée à haute fréquence pour réaliser une fonction d'amortissement semi-active par un élément de réglage de force ou un élément d'étranglement.

6. Dispositif selon l'une ou plusieurs des revendications 1 à 5, caractérisé par une unité de réglage commune effectuant les fonctions d'éléments de réglage et d'amortissement, avec chaque fois deux chambres de travail (46a, 46b) pour l'étage de compression et l'étage de traction, ces chambres étant reliées à une alimentation en fluide sous pression par des soupapes d'arrêt (48a, 48b) avec en parallèle, des soupapes (52a, 53a ; 52b, 53b) branchées en série (figure 3).

7. Dispositif selon la revendication 6, caractérisé par un ressort hydropneumatique (13'') branché en parallèle à l'ensemble de l'élément de réglage et d'amortissement.

8. Dispositif selon la revendication 6 ou 7, caractérisé en ce que le ressort hydropneumatique est constitué par un ensemble cylindre/piston (35) dont la chambre de travail hydraulique (40) est reliée à un réservoir (42) contenant un coussin de gaz comprimé (44) en plus du fluide hydraulique.

9. Dispositif selon les revendications 6, 7, 8, caractérisé en ce que l'ensemble combiné d'éléments de réglage et d'amortisseurs se compose d'un même ensemble cylindre/piston (36) dont le prolongement de la tige de piston constitue en même temps le piston de l'ensemble cylindre/piston (35) du ressort hydropneumatique (13'').

10. Dispositif selon l'une des revendications 6 à 9, caractérisé en ce que l'ensemble cylindre/piston (36) de l'ensemble combiné éléments de réglage/amortisseurs subdivise une chambre de cylindre en une chambre de travail (46a) supérieure pour l'étage de compression, et une chambre de travail inférieure (46b) pour l'étage de traction, à l'aide d'une saillie annulaire (30), extérieure, chambres dont les branchements sont reliés par des conduites de liaison (47a, 47b) comportant des soupapes anti-retour (48a, 48b) avec chaque fois des réservoirs (49a, 49b) de compensation du volume de l'étage de compression et de compensation du volume de l'étage de traction, et en parallèle aux soupapes d'arrêt (48a, 48b) on a un montage en série de soupapes d'étranglement (52a, 53a ; 52b, 53b), et chaque première soupape d'étranglement (52a, 52b) est commandée et commutée dans le même sens que la régulation et le réglage d'amortissement des composants actifs, et des secondes soupapes d'étranglement (53a, 53b) sont commandées et commutées chaque fois en sens opposé, en commun, par rapport à la régulation des composants d'amortissement passif des unités de commandes (52, 53).

11. Dispositif selon l'une des revendications 6 à 10, caractérisé en ce que les conduites (47a, 47b) reliées à la chambre de travail de l'étage de compression (46a) et à la chambre de travail (46b) de l'étage de traction sont reliées à une pompe hydraulique (54) fournissant du fluide hydraulique sous pression.

12. Dispositif selon la revendication 11, caractérisé en ce que la pompe qui fournit le fluide hydraulique sous pression est une pompe hydraulique sans fuite et est entraînée par un moyen d'entraînement auto-bloquant (55), de façon que la pompe assure la régulation d'assiette par relevage ou abaissement sélectif du niveau de pression dans les chambres respectives.

13. Dispositif selon l'une ou plusieurs des revendications 1-12, caractérisé en ce que la commande des différentes soupapes (21a, 21b ; 21a', 21b' ; 52a, 52b ; 53a, 53b) par un élément de réglage (13, 13') pneumatique ou hydraulique ou un ensemble fonctionnel élément de réglage/amortisseur, est assurée par une logique centrale recevant des signaux de capteurs de la vitesse relative de la caisse et de la roue, des vitesses absolues de la caisse et de la roue, des vitesses absolues de la caisse et de la roue, de l'état de charge, de la distribution de la charge entre les essieux, de la vitesse de déplacement, des accélérations longitudinales et transversales du véhicule ainsi que des irrégularités de la chaussée, des mouvements de direction, etc... et cette logique commande les différents entraînements de soupapes (électro-aimants de réglage 25a, 25b, unités de commande 52, 53).
